# FASCICULE DE BREVET EUROPEEN

(11) **EP 3 484 697 B1**
(45) Date de publication et mention de la délivrance du brevet: **02.09.2020**
(21) Numéro de dépôt: 17745835.3
(22) Date de dépôt: 05.07.2017
(51) Int. Cl.: B29D 30/06, B29C 33/42, B29D 30/68

(54) **LAMELLE EVOLUTIVE POUR GARNITURE D'UN MOULE DESTINE A LA VULCANISATION D'UN PNEUMATIQUE**
KLINGE MIT UNTERSCHIEDLICHEN DICKEN FÜR DIE AUSKLEIDUNG EINER FORM ZUR VULKANISIERUNG EINES REIFENS
BLADE, HAVING DIFFERENT THICKNESSES, FOR THE LINING OF A MOLD USED FOR VULCANIZING A TIRE

(30) Priorité: 18.07.2016 FR 1670386
(43) Date de publication de la demande: 22.05.2019
(73) Titulaire: Compagnie Générale des Etablissements Michelin, 63000 Clermont-Ferrand (FR)
(72) Inventeur: BLANCHET, Etienne, 63040 Clermont-Ferrand Cedex 9 (FR); PICHOIR, Sébastien, 63040 Clermont-Ferrand Cedex 9 (FR)
(74) Mandataire: Roussy, Delphine
(86) Numéro de dépôt international: PCT/FR2017/051829
(87) Numéro de publication internationale: WO 2018/015629

(56) Documents cités:
- EP-A1- 0 774 307
- WO-A1-2011/161248
- WO-A1-2012/152593
- US-A- 2 736 924
- US-B1- 6 264 453

## Description

### DOMAINE TECHNIQUE DE L'INVENTION

La présente invention concerne une lamelle de garniture d'un moule pour la vulcanisation de pneumatique.

### ETAT DE LA TECHNIQUE ANTERIEURE

Le document US6264453 décrit des lamelles de garniture d'un moule pour la vulcanisation de pneumatique. Les lamelles sont pourvues de bourrelets permettant de produire des canaux de profil tubulaire dans les bandes de roulement des pneumatiques moulés. Ces canaux sont orientés dans le sens radial du pneumatique. Une telle orientation ne permet pas d'optimiser certaines propriétés des pneumatiques. En outre, une telle orientation ne permet pas de produire sur le pneumatique qui sera moulé des canaux cachés pour l'évacuation de l'eau après usure.

Il existe donc un besoin pour des lamelles permettant de produire des pneumatiques avec des propriétés dynamiques optimales.

Pour pallier ces différents inconvénients, l'invention prévoit différents moyens techniques.

### EXPOSE DE L'INVENTION

Tout d'abord, un premier objet de l'invention consiste à prévoir une lamelle de garniture d'un moule pour la vulcanisation de pneumatique permettant de réaliser des bandes de roulement de pneumatiques dotées de caractéristiques dynamiques optimales.

Un autre objet de l'invention consiste à prévoir une lamelle de garniture d'un moule pour la vulcanisation de pneumatique permettant de réaliser sur les pneumatiques des canaux complexes dans le sens circonférentiel.

Pour ce faire, l'invention prévoit une lamelle pour une garniture d'un moule destiné à la vulcanisation d'une bande de roulement d'un pneumatique, ladite lamelle comprenant :
- une partie d'ancrage configurée pour ancrer la lamelle dans un corps de la garniture ;
- une partie de moulage configurée pour mouler au moins une incision dans la bande de roulement du pneumatique ;
la partie de moulage comprenant au moins une portion mince et un bourrelet, la portion mince étant réalisée selon un premier procédé et le bourrelet étant réalisé selon un second procédé différent du premier.

Une telle architecture de lamelle permet de produire des pneumatiques comportant des éléments à géométries complexes difficilement réalisables avec un seul procédé de fabrication.

Selon l'invention, le bourrelet est agencé en forme de U évasé et plus préférentiellement selon une direction évolutive. Un tel profil permet de produire des pneumatiques dont les caractéristiques dynamiques sont particulièrement avantageuses. En outre, les incisions obtenues présentent une alternance de zones minces et élargies, tant dans la direction radiale que dans la direction axiale. Lors de l'usure de la bande de roulement, de nouvelles zones sont progressivement libérées, permettant de prolonger les caractéristiques dynamiques du pneumatique malgré l'usure de la bande de roulement.

De manière avantageuse, le bourrelet est agencé selon une section évolutive. La section est avantageusement prévue de sorte que le cercle dans lequel le profil du bourrelet s'inscrit a un diamètre compris entre 2mm et 15mm.

Selon encore un mode de réalisation avantageux, le bourrelet sépare la portion mince en deux.

**Le** bourrelet est avantageusement réalisé selon un procédé impliquant une fusion sélective par laser. Un tel procédé permet de produire une multitude de profils complexes, offrant de vastes possibilités aux concepteurs de pneumatiques qui peuvent ainsi véritablement optimiser les caractéristiques des pneumatiques.

**La** portion mince est préférablement réalisée selon un procédé sans fusion sélective par laser. En outre, en utilisant un procédé classique tel que l'emboutissage, il est possible de produire des parties minces dont l'épaisseur moyenne est comprise entre 0.1 et 0.4 mm, avec les zones les plus minces pouvant même atteindre 0.05 mm.

Selon un mode de réalisation avantageux, le bourrelet comprend une fente longitudinale permettant l'assemblage d'une plaque unique pour former la lamelle.

Selon un mode de réalisation avantageux, l'assemblage des parties minces et du bourrelet est réalisé par soudure, ou par goupillage, ou par clipsage, ou par sertissage ou par collage.

L'invention prévoit également un moule pour vulcanisation de pneumatique, comportant une pluralité de lamelles telles que préalablement décrites.

### DESCRIPTION DES FIGURES

Tous les détails de réalisation sont donnés dans la description qui suit, complétée par les figures 1 à 2c, présentées uniquement à des fins d'exemples non limitatifs, et dans lesquelles:
- la figure 1 est une vue en perspective d'un exemple d'une lamelle insérée dans un moule montré en coupe ;
- la figure 2a est une vue en perspective d'un autre exemple de lamelle ;
- la figure 2b est une vue éclatée de la lamelle de la figure 2a ;
- la figure 2c est une vue de côté de la lamelle de la figure 2a.

### DESCRIPTION DETAILLEE DE L'INVENTION

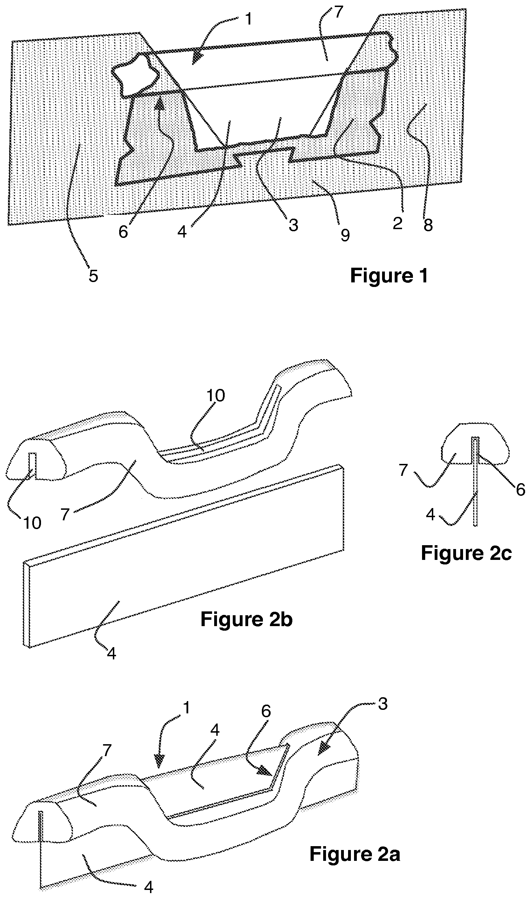

La figure 1 illustre un exemple de réalisation d'une lamelle 1 pour une garniture d'un moule destiné à la vulcanisation d'une bande de roulement d'un pneumatique. Le corps 5 dans lequel la lamelle est insérée est montré en coupe transversale. On observe que la lamelle s'étend d'un côté à l'autre du corps 5 et qu'une partie, dite partie de moulage 3, est libre entre les deux cordons 8 du corps 5. La partie de la lamelle qui est logée dans les cordons 8 et la base 9 du corps 5 forme une partie d'ancrage 2. La partie de moulage 3 est configurée pour mouler au moins une découpure dans la bande de roulement du pneumatique. La partie d'ancrage 2 est configurée pour assurer le maintien de la lamelle 1 dans le corps 5 de la garniture.

Tel qu'illustré, la partie de moulage 3 comprend un bourrelet 7 et une portion mince 4. Selon les modes de réalisation, la portion mince peut être d'une épaisseur moyenne comprise entre 0.1 et 0.4 mm, avec les zones les plus minces pouvant même atteindre 0.05 mm. De telles épaisseurs sont avantageusement obtenues grâce à un procédé de mise en forme tel que l'emboutissage.

Dans l'exemple de la figure 1 qui ne fait pas partie de l'invention, le bourrelet 7 forme la bordure de la zone de moulage. Un tel agencement permet, lors du moulage du pneumatique, de former dans les éléments de sculpture de la bande de roulement du pneumatique un tunnel axial qui est caché lorsque le pneumatique est neuf ou peu usé, et se libère progressivement lorsque le niveau d'usure s'accentue. Une fois libéré, ce canal facilite l'évacuation de l'eau hors de la bande de roulement.

Dans l'exemple de réalisation de la figure 2a, le parcours du bourrelet 7 le long de la zone de moulage 3 forme un « U » évasé. Le même bourrelet a un profil en forme de triangle tronqué. Ces complexités au niveau du profil et du parcours sont avantageusement mises en œuvre grâce à un mode de fabrication par addition de matière, de préférence avec fusion sélective par laser. Le parcours du bourrelet du mode de réalisation de la figure 2a permet de réaliser des incisions dans la bande de roulement du pneumatique moulé pourvues de zones élargies ou canaux avec des portions cachées et d'autres portions libres lorsque le pneumatique est non usé. Avec l'usure, les portions cachées sont progressivement libérées, faisant en sorte que les performances du pneumatique sont maintenues même lorsque la bande de roulement s'use.

Dans les exemples illustrés, l'assemblage 6 entre la portion mince 4 et le bourrelet 7 est mis en œuvre par soudure. D'autre mode de fixation peuvent également être utilisés tels que par goupillage, ou par clipsage, par sertissage ou collage. En outre, la figure 2b illustre un mode de réalisation de la lamelle de la figure 2a dans lequel le bourrelet 7 comporte une fente d'insertion 10 longitudinale dans laquelle la portion mince 4, prenant la forme d'une plaque de préférence unique ou unitaire, est assemblée dans le bourrelet 7 par insertion et glissement longitudinal dans la fente 10. En fin de course, une butée permet d'éviter que la plaque n'excède la position prévue. Un assemblage serré permet normalement un bon maintien de la plaque 4. Une sécurisation d'assemblage peut aussi être réalisée en plus, selon l'un ou l'autre des modes d'assemblage 6 préalablement indiqués. La plaque 4 assemblée est également montrée de côté à la figure 2c.

### Numéros de référence employés sur les figures

- 1: Lamelle
- 2: Zone d'ancrage
- 3: Zone de moulage
- 4: Portion mince ou plaque
- 5: Corps de garniture
- 6: Assemblage
- 7: Bourrelet
- 8: Doigt du corps de garniture
- 9: Base du corps de garniture
- 10: Fente d'insertion

## Revendications

1. Lamelle (1) pour une garniture d'un moule destiné à la vulcanisation d'une bande de roulement d'un pneumatique, ladite lamelle comprenant :
- une partie d'ancrage (2) configurée pour ancrer la lamelle (1) dans un corps (5) de la garniture ;
- une partie de moulage (3) configurée pour mouler au moins une incision dans la bande de roulement du pneumatique ;
la partie de moulage (3) comprenant au moins une portion mince (4) et un bourrelet (7), ladite portion mince (4) étant réalisée selon un premier procédé et ledit bourrelet (7) étant réalisé selon un second procédé différent du premier, **caractérisée en ce que** le bourrelet (7) est agencé en forme de U évasé.

2. Lamelle (1) selon la revendication 1, dans laquelle le bourrelet (7) est agencé selon une direction évolutive.

3. Lamelle (1) selon l'une quelconque des revendications précédentes, dans laquelle le bourrelet (7) est agencé selon une section évolutive.

4. Lamelle (1) selon l'une quelconque des revendications précédentes, dans laquelle le bourrelet (7) sépare la portion mince (4) en deux.

5. Lamelle (1) selon l'une quelconque des revendications précédentes, dans laquelle le bourrelet (7) est réalisé selon un procédé impliquant une fusion sélective par laser.

6. Lamelle (1) selon l'une quelconque des revendications précédentes, dans laquelle la portion mince (4) est réalisée selon un procédé sans fusion sélective par laser.

7. Lamelle (1) selon l'une quelconque des revendications précédentes, dans laquelle le bourrelet (7) comprend une fente (10) longitudinale permettant l'assemblage d'une plaque (4) unique pour former la lamelle.

8. Lamelle (1) selon l'une quelconque des revendications précédentes, dans laquelle l'assemblage des portions minces (4) et du bourrelet (7) est réalisé par soudure, ou par goupillage, ou par clipsage, ou par sertissage ou collage.

9. Moule pour vulcanisation de pneumatique, comportant une pluralité de lamelles (1) selon l'une des revendications 1 à 8.

## Patentansprüche

1. Lamelle (1) für eine Auskleidung einer Form, die zur Vulkanisation einer Lauffläche eines Reifens bestimmt ist, wobei die Lamelle Folgendes aufweist:
- ein Verankerungsteil (2), das ausgebildet ist, um die Lamelle (1) in einem Körper (5) der Auskleidung zu verankern;
- ein Formteil (3), das ausgebildet ist, um mindestens einen Einschnitt in die Lauffläche des Reifens zu formen;
wobei das Formteil (3) mindestens einen dünnen Bereich (4) und eine Wulst (7) aufweist, wobei der dünne Bereich (4) nach einem ersten Verfahren hergestellt wird und die Wulst (7) nach einem zweiten Verfahren hergestellt wird, das sich von dem ersten unterscheidet, **dadurch gekennzeichnet, dass** die Wulst (7) in Form eines aufgeweiteten U angeordnet ist.

2. Lamelle (1) nach Anspruch 1, wobei die Wulst (7) in einer erweiterbaren Richtung angeordnet ist.

3. Lamelle (1) nach einem der vorhergehenden Ansprüche, wobei die Wulst (7) in einem erweiterbaren Abschnitt angeordnet ist.

4. Lamelle (1) nach einem der vorhergehenden Ansprüche, wobei die Wulst (7) den dünnen Bereich (4) in zwei Teile trennt.

5. Lamelle (1) nach einem der vorhergehenden Ansprüche, wobei die Wulst (7) nach einem Verfahren hergestellt wird, das selektives Laserschmelzen aufweist.

6. Lamelle (1) nach einem der vorhergehenden Ansprüche, wobei der dünne Bereich (4) nach einem Verfahren ohne selektives Laserschmelzen hergestellt wird.

7. Lamelle (1) nach einem der vorhergehenden Ansprüche, wobei die Wulst (7) einen Längsschlitz (10) aufweist, der die Anbringung einer einzelnen Platte (4) zur Bildung der Lamelle ermöglicht.

8. Lamelle (1) nach einem der vorhergehenden Ansprüche, wobei das Anbringen der dünnen Bereiche (4) und der Wulst (7) durch Schweißen oder durch Versplinten oder durch Klipsen oder durch Crimpen oder Kleben erfolgt.

9. Form zur Vulkanisation eines Reifens, die eine Vielzahl von Lamellen (1) nach einem der Ansprüche 1 bis 8 aufweist.

## Claims

1. Lamella (1) for a lining of a mould intended for vulcanizing a tread of a tyre, said lamella comprising:
- an anchoring part (2) configured to anchor the lamella (1) in a body (5) of the lining;
- a moulding part (3) configured to mould at least one sipe in the tread of the tyre;
the moulding part (3) comprising at least one thin portion (4) and a bulge (7), the said thin portion (4) being produced by a first method and the said bulge (7) being produced by a second method different from the first
**characterized in that** the bulge (7) is arranged in a flared U shape.

2. Lamella (1) according to Claim 1, wherein the bulge (7) is arranged in a varying direction.

3. Lamella (1) according to any one of the preceding claims, wherein the bulge (7) is arranged along a varying section.

4. Lamella (1) according to any one of the preceding claims, wherein the bulge (7) divides the thin portion (4) in two.

5. Lamella (1) according to any one of the preceding claims, wherein the bulge (7) is produced by a method involving selective laser melting.

6. Lamella (1) according to any one of the preceding claims, wherein the thin portion (4) is produced by a method not involving selective laser melting.

7. Lamella (1) according to any one of the preceding claims, wherein the bulge (7) comprises a longitudinal slot (10) for the assembly of a single plate (4) for forming the lamella.

8. Lamella (1) according to any one of the preceding claims, wherein the thin portions (4) and the bulge (7) are assembled by welding, or by pinning, or by clip-fastening, or by crimping or bonding.

9. Mould for vulcanizing a tyre, having a plurality of lamellae (1) according to one of Claims 1 to 8.
